# EUROPÄISCHE PATENTSCHRIFT

(11) **EP 1 243 474 B1**
(45) Veröffentlichungstag und Bekanntmachung des Hinweises auf die Patenterteilung: **14.12.2005**
(21) Anmeldenummer: 02005703.0
(22) Anmeldetag: 13.03.2002
(51) Int. Cl.: B60R 5/04

(54) **Laderaumabdeckung für Kraftwagen, wie für Kombinations-Personenkraftwagen oder dergleichen**
Load compartment cover for vehicles, in particular for station wagons and the like
Couvercle pour le compartiment à bagages de véhicule, notament pour voiture familiale ou similaire

(30) Priorität: 20.03.2001 DE 10113621
(43) Veröffentlichungstag der Anmeldung: 25.09.2002
(73) Patentinhaber: BOS GmbH & Co. KG, 73760 Ostfildern (DE)
(72) Erfinder: De Ceuster, Peter, 2222 Itegem (BE)
(74) Vertreter: Patentanwälte Ruff, Wilhelm, Beier, Dauster & Partner

(56) Entgegenhaltungen:
- EP-A- 1 084 907
- EP-A- 1 225 093
- DE-A- 4 016 707
- PATENT ABSTRACTS OF JAPAN Bd. 2000, Nr. 01, 31. Januar 2000 (2000-01-31) & JP 11 286243 A (NHK SPRING CO LTD), 19. Oktober 1999 (1999-10-19)

## Beschreibung

Die Erfindung betrifft eine Laderaumabdeckung für Kraftwagen, wie für Kombinations-Personenkraftwagen entsprechend dem Anspruch 1.

In der nachveröffentlichten EP-A-1 177 948, die einen Stand der Technik gemäß Art. 54 (3) EPÜ darstellt, ist eine solche Laderaumabdeckung mit einer in einem Rollogehäuse angeordneten, mittels eines Federmotors im Aufwickeldrehsinn angetriebenen Wickelwelle zur Aufnahme einer Werkstoffbahn beschrieben. Der innere Querrand der Werkstoffbahn ist an der Wickelwelle befestigt, während deren äußerer Querrand an einer zugleich als Endbord ausgebildeten Querversteifung gehalten ist. Dem Endbord ist beidendig je ein Führungselement (Gleitstein) zugeordnet, welches jeweils in einer fahrzeugseitig befestigten Längsführung (Führungsschiene) gleitbar angeordnet ist, die einen U-förmigen oder hinterschnittenen C-förmigen Querschnitt aufweisen kann. Auf diese Weise ist die Werkstoffbahn mittels ihres an den Führungs-Gleitelementen geführten Endbordes in Schließ- und Öffnungsrichtung geführt. Schließlich ist das Rollogehäuse von den beiden fahrzeugseitig befestigten Längsführungen unabhängig im fahrzeugseitigen Einbaufeld befestigt.

Von der DE 42 00 021 A1 ist eine Laderaumabdeckung mit einem Abdeckrollo bekannt, bei welcher das Rollogehäuse einschließlich Werkstoffbahn und Querversteifung den beiden Längsführungen lösbar befestigt zugeordnet sind.

In der DE 198 25 353 A1 ist eine Laderaumabdeckung insbesondere für Kombinations-Kraftwagen beschrieben, welche an beiden Längsseiten des Laderaums je einen mit einem eigenen Antriebsmotor versehenen Linearantrieb aufweist, welcher mit Mitnehmern zur lösbaren Kupplung mit einer am freien Querrand angeordneten Querversteifung einer Rollobahn versehen ist. Beide elektrische Antriebsmotoren sind mittels einer Synchronisierungsvorrichtung im Gleichlaufsinne drehzahlgeregelt.

Von der DE 40 16 707 A1 ist eine als Faltabdeckung ausgebildete Laderaumabdeckung bekannt, bei welcher beidendseitige Köpfe von Querstreben jeweils in hinterschnittenen C-förmig profilierten Längsführungen angeordnet sind. Jede der beiden Längsführungen nimmt ein hinreichend drucksteifes Lochband aus Kunststoff auf. Zum translatorischen Antrieb der beiden Lochbänder greifen deren innere Enden an diametral gegenüberliegenden Umfangsstellen eines mit etwa stachelartigen Fortsätzen versehenen Antriebsrades formschlüssig an. Die beiden Längsführungen mit den Lochbändern sowie die das Antriebsrad mit einem elektrischen Antriebsmotor aufnehmende Antriebseinheit bilden insgesamt eine zusammenhängende starre fahrzeugfest installierte Baugruppe.

Ausgehend von der in der EP-A-1 177 948 beschriebenen Laderaumabdeckung, liegt der Erfindung die Aufgabe zugrunde, eine einfach zu handhabende Laderaumabdeckung kompakter Bauform mit motorischem Antrieb zu schaffen.

Diese Aufgabe wird entsprechend der Gesamtheit der Merkmale des Anspruchs 1 gelöst.

Entsprechend der Erfindung sind das Rollogehäuse einschließlich der Werkstoffbahn und deren Querversteifung den beiden Längsführungen lösbar befestigt zugeordnet. Zugleich enthält das erfindungsgemäße Rollogehäuse mindestens einen motorischen Antrieb für zwei langgestreckte, umlenkbare, hinreichend drucksteife Getriebemittel-Abschnitte (z. B. Lochbänder). Diese Getriebemittel-Abschnitte greifen jeweils mit ihrem äußeren Ende an einem Führungselement (z.B. an einem Gleitstein) der Querversteifung an und können aus dem Rollogehäuse heraus in die zugeordnete Längsführung hinein- und aus dieser wieder herausbewegt werden.

Mit der Erfindung ist demnach eine Laderaumabdeckung geschaffen worden, deren Rollogehäuse bei auf der Wickelwelle aufgewickelter Werkstoffbahn mitsamt der Querversteifung von den Längsführungen weg aus dem Fahrzeug entnommen und wiederum gewissermaßen mit einem Griff in seine Befestigungslage zurückgeführt werden kann.

Sobald sich das Rollogehäuse in der Befestigungslage befindet und die Energieeinspeisung des motorischen Antriebs hergestellt ist, kann letzterer in Gang gesetzt und die Getriebemittel-Abschnitte mitsamt der mit der Werkstoffbahn verbundenen Querversteifung ausgefahren und bei Bedarf wiederum eingefahren werden:

In weiterer Ausgestaltung der Erfindung befindet sich jeder Getriebemittel-Abschnitt im getrieblichen Formschlusseingriff mit einem Antriebsrad.

Jedem Antriebsrad sind Führungsbereiche für den korrespondierenden Getriebemittel-Abschnitt zugeordnet, von denen ein geradliniger Führungsbereich dafür sorgt, dass der zugeordnete Getriebemittel-Abschnitt in ausgerichteter Weise in die Längsführung eingeführt wird. Ein anderer Führungsbereich, der teilkreisförmige Führungsbereich, umgibt einen Teilumfang des Antriebsrades und sorgt so für einen präzisen formschlüssigen Eingriff zwischen dem Getriebemittel-Abschnitt und dem Antriebsrad.

Schließlich ist an der dem geradlinigen Führungsbereich abgewandten Seite des Antriebsrades ein Umlenkungs-Führungsbereich angeordnet, welcher insbesondere für eine behinderungsfreie Einfahrbewegung des jeweiligen inneren Endes der Getriebemittel-Abschnitte sorgt, während die Stoffbahn aufgewickelt wird.

An die Umlenkungs-Führungsbereiche schließen sich außerdem Aufnahmeräume oder ein gemeinsamer Aufnahmeraum für die inneren Enden der Getriebemittel-Abschnitte an. Diese vom Rollogehäuse gebildeten Aufnahmeräume oder der gemeinsame Aufnahmeraum für die inneren Enden beider Getriebemittel-Abschnitte bilden, ebenso wie das Merkmal, das das Rollogehäuse sowohl die Getriebemittel als auch den motorischen Antrieb aufnimmt, eine besondere Eigenart der Erfindung und sind zudem eine wesentliche Voraussetzung für die von der Erfindung erzielte kompakte Bauform.

Der Antrieb der Wickelwelle im Aufwickeldrehsinn geschieht zweckmäßig in bekannter Weise mit einem der Wickelwelle zugeordneten Federmotor, weicher beim Ausfahren bzw. Abwickeln der Werkstoffbahn gespannt wird, und welcher sich beim Aufwickeln der Werkstoffbahn entspannt. Zur Unterstützung der Aufwickelbewegung kann es zweckmäßig sein, einen reversierbaren Antriebsmotor zu verwenden, welcher sowohl beim Ausfahren als auch beim Aufwickeln (Einfahren) der Werkstoffbahn tätig ist.

Überhaupt hat es sich neben anderen Antriebsarten als zweckmäßig herausgestellt, dass jeder Antriebsmotor ein elektrischer Antriebsmotor, insbesondere ein reversierbarer elektrischer Antriebsmotor ist.

Ebenfalls der einfachen Handhabung und auch einer geschlossenen kompakten Bauform dienen die Erfindungsmerkmale, wonach zur Einspeisung des elektromotorischen Antriebs aus dem Rollogehäuse elektrische Kontakte herausgeführt sind, welche mit fahrzeugseitigen elektrischen Gegenkontakten zusammenwirken. Durch diese Merkmale hat die Erfindung die Möglichkeit geschaffen, während des Herausnehmens des Rollogehäuses den elektromotorischen. Antrieb von seiner Energieversorgung zu trennen und diesen in umgekehrter Weise beim Wiedereinsetzen des Rollogehäuses gewissermaßen selbsttätig mit der fahrzeugseitigen Energieversorgung zu verbinden.

Weitere Ausgestaltungen der Erfindung sind zusätzlichen Unteransprüchen zu entnehmen.

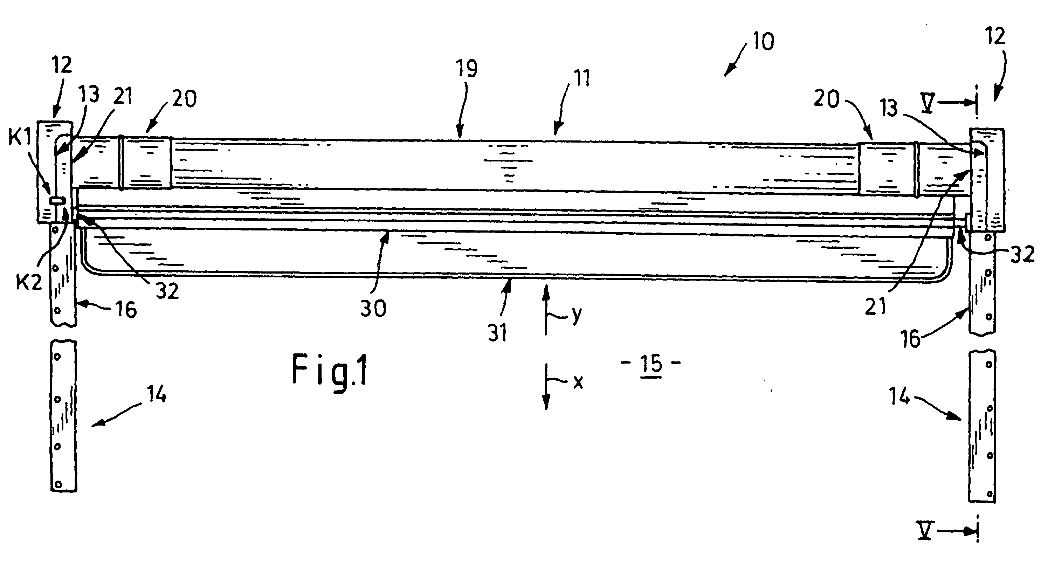

In den Zeichnungen ist ein bevorzugtes Ausführungsbeispiel entsprechend der Erfindung dargestellt, es zeigt
Fig. 1 in Alleinstellung eine schematische Draufsicht auf eine Laderaumabdeckung,
Fig. 2 wesentliche Bauteile der Laderaumabdeckung gemäß Fig. 1 in auseinandergezogener räumlicher Darstellung,
Fig. 3 ein vergrößertes Detail in räumlicher Darstellung etwa entsprechend dem mit III bezeichneten Hinweispfeil in Fig. 2,
Fig. 4 in Anlehnung an die Darstellung gemäß Fig. 3 die dort gezeigte Anordnung in zusammengebauter Form,
Fig. 5 eine Schnittansicht entsprechend der in Fig. 1 eingetragenen Schnittlinie V-V,
Fig. 6 eine räumliche Darstellung eines drucksteifen Getriebemittel-Abschnitts (Lochband) in Zuordnung zu einem Führungselement (Gleitstein) und einer Querversteifung (Zugstab) in auseinandergezogener räumlicher Darstellung,
Fig. 7 die Anordnung gemäß Fig. 6 in zusammengebauter räumlicher Darstellung und
Fig. 8 ein vergrößertes Detail einer Antriebsanordnung entsprechend dem mit VIII bezeichneten Hinweispfeil in Fig. 2.

In den Zeichnungen ist eine elektrisch betriebene Laderaumabdeckung insgesamt mit der Bezugsziffer 10 versehen.

Die Laderaumabdeckung 10 weist ein Rollogehäuse 11 auf, welches von oben her in Aufnahmetaschen 13 von fahrzeugseitig festen Aufnahmen 12 einsetzbar ist.

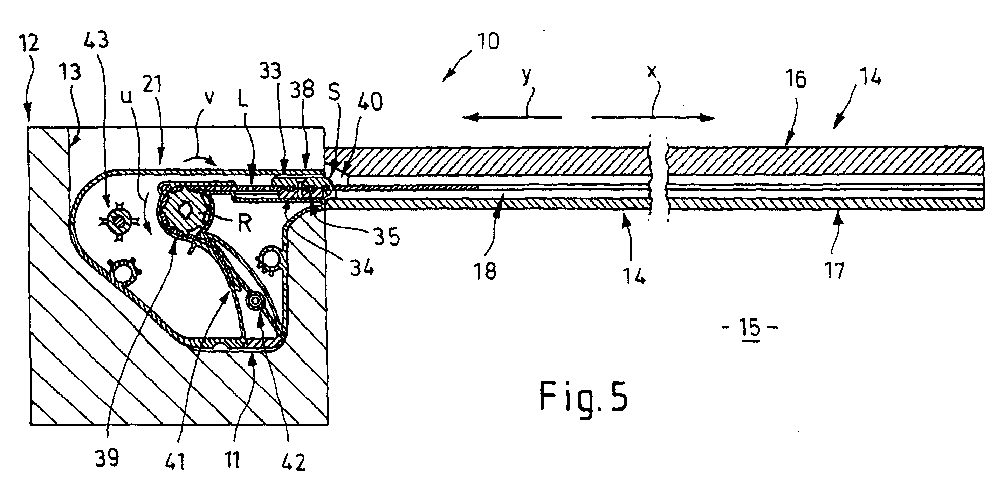

An die Aufnahmen 12 schließen sich fahrzeugseitig fest eingebaute Führungsschienen 14 an, welche sich entlang beider Längsseiten des mit der Bezugsziffer 15 angedeuteten Laderaums erstrecken. Die Führungsschienen 14 setzen sich jeweils aus einer oberen Teilschiene 16 und aus einer unteren Teilschiene 17 zusammen und umschließen so einen C-förmig hinterschnittenen Führungskanal 18 (s. Fig. 5), dessen innere Längsseite jeweils zum Laderaum 15 hin offen ist.

Das Rollogehäuse 11 weist ein mittleres Gehäuseteil 19 und an dessen beiden Enden Antriebsgehäuse 20 auf, welche jeweils mittels einer Endkappe 21 verschlossen sind. Die Antriebsgehäuse 20 mit Endkappen 21 können gegebenenfalls entlang der Gehäuse-Längsachse z nach innen zum mittleren Gehäuseteil 19 hin einfederbar ausgestaltet sein, wenn dies die Befestigungsmontage in den fahrzeugseitig festen Aufnahmen 12 erfordert.

In dem Gehäuse-Längskanal 22, welcher auch die beiden Antriebsgehäuse 20 durchdringt, ist jeweils eine hohle Wickelwelle 23 aufgenommen, deren Innenraum in bekannter Weise einen nicht dargestellten Federmotor enthält, welcher versucht, die Wickelwelle 23 in Aufwickelrichtung u zu drehen. Die Abwickelrichtung ist mit v bezeichnet.

Jedes Antriebsgehäuse 20 nimmt einen elektrischen Antriebsmotor M mit einem angeflanschten Getriebe G auf. Beide Getriebe G sind mittels einer zwei Teilwellen 25 aufweisenden Gleichlaufwelle 24 miteinander drehverbunden. Beide einander zugekehrten Enden der Teilwellen 25 sind mittels einer einen Längenausgleich erlaubenden Steckvorrichtung 26 drehgekuppelt.

Ein Gehäuselängskanal 27, welcher sich auch in die beiden Antriebsgehäuse 20 hinein fortsetzt, bildet einen gemeinsamen Aufnahmeraum für die aufeinander zu nach innen weisenden Enden 28 von aus Kunststoff bestehenden, hinreichend drucksteifen, Lochbändern (Getriebemittel-Abschnitte) L, welche sich mit Antriebsrädern R in einem formschlüssigen Getriebeeingriff befinden. Die Antriebsräder R sind ebenso wie die Wickelwelle 23 in den Endkappen 21 drehgelagert.

Eine biegsame bzw. biegeschlaffe Werkstoffbahn W ist mit ihrem inneren Querrand in nicht näher dargestellter Weise an der Wickelwelle 23 befestigt. Am äußeren Querrand 29 der Werkstoffbahn W ist ein als Hohlprofil ausgebildeter Zugstab (Querversteifung) 30 befestigt, welcher wiederum ein Endbord 31 hält.

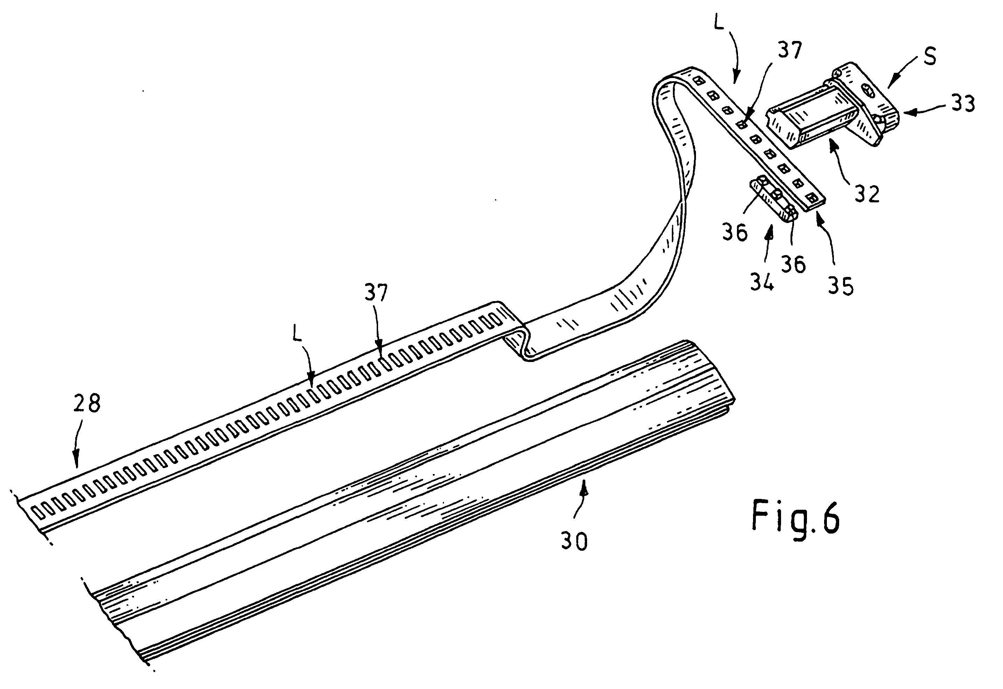

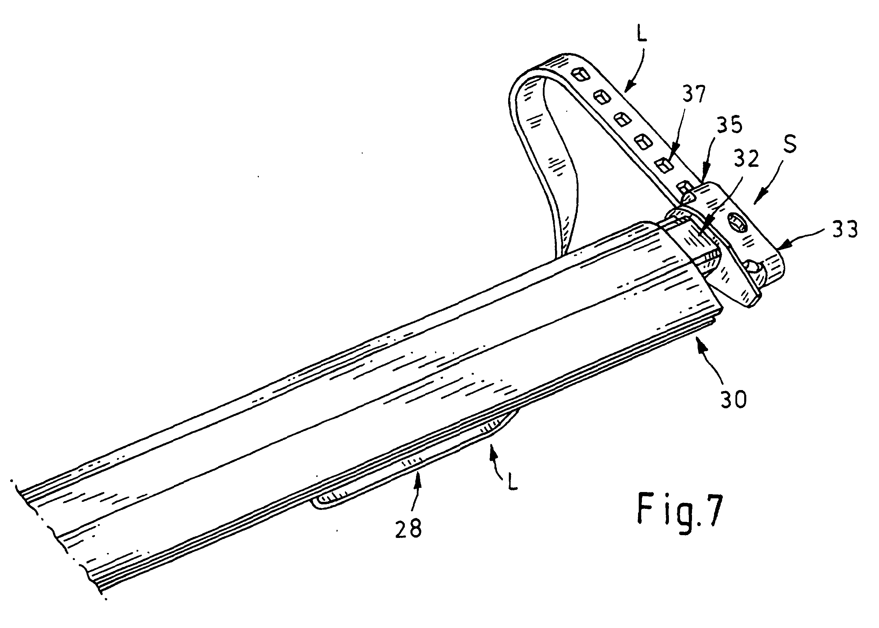

In jedem Ende des Zugstabes 30 (s. Fig. 6 und 7) ist ein Steckeinsatz 32 eines Gleitsteins S (Führungselement) steckgehaltert. Der Gleitstein S weist ein Oberteil 33 und ein Unterteil 34 auf, die, beide miteinander verschraubt, das äußere Ende 35 des Lochbandes L formschlüssig zug- und druckfest zwischen sich aufnehmen. Hierzu weist das Unterteil 34 Vorsprünge 36 auf, welche die Löcher 37 des Lochbandes L durchgreifen. In den Zeichnungen sind übrigens die Löcher 37 der Lochbänder L nur teilweise eingetragen.

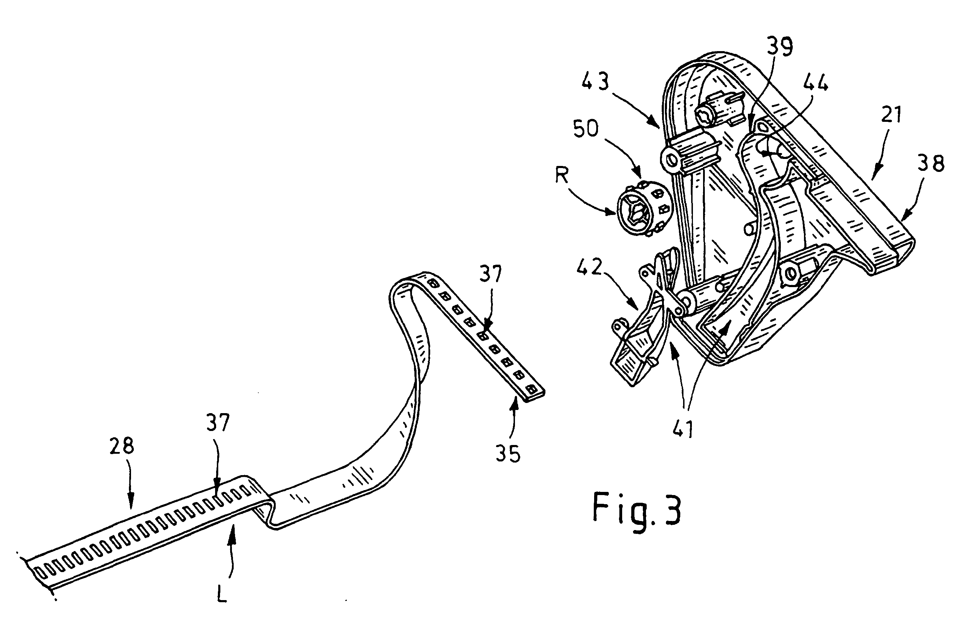

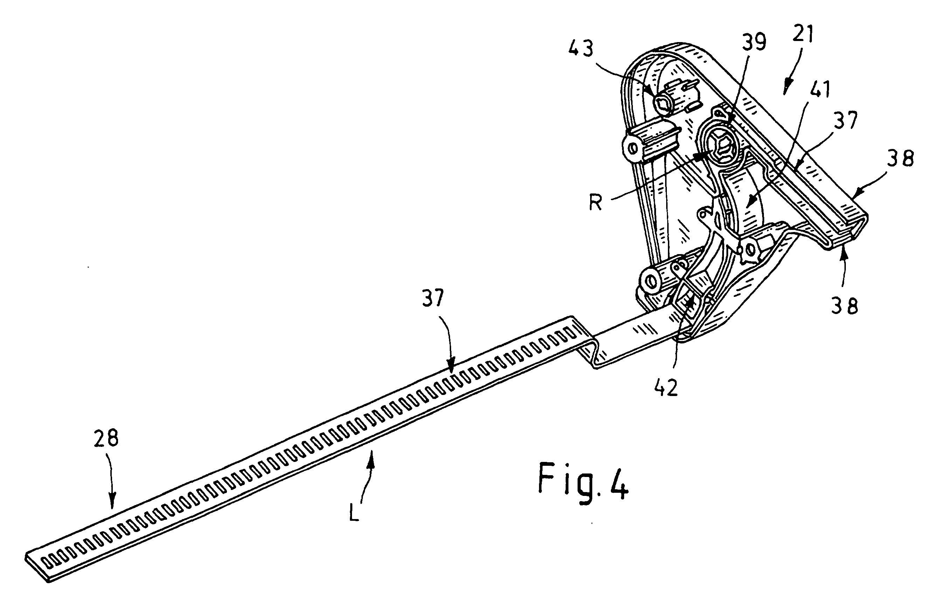

Zur Führung des zugeordneten Lochbandes L (s. Fig. 3-5) bildet jede Endkappe 21 zwischen dem Antriebsrad R und dem benachbarten Führungskanal 18 einen mit dem Führungskanal 18 ausgerichteten geradlinigen Führungsansatz 38

Um einen einwandfreien geschmeidigen Eintritt des Gleitsteins S in den Führungskanal 18 hinein zu gewährleisten, weist der Führungskanal 18 an seinem dem geradlinigen Führungsansatz 38 zugewandten Ende eine trichterförmige Aufweitung 40 auf.

Innen an den geradlinigen Führungsansatz 38 schließt sich ein ebenfalls von der Endkappe 39 gebildeter Teilkreis-Führungsbereich 39 an, welcher das Antriebsrad R teilkreisförmig umgibt und für einen präzisen Formschlusseingriff und Andruck zwischen Lochband L und Antriebsrad R sorgt.

Innen an den Teilkreis-Führungsbereich 39 schließt sich ein Umlenkungs-Führungsbereich 41 an, welcher kanalartig ausgebildet und mittels einer Kanalplatte 42 verschlossen ist und welcher das Lochband L - in dessen Bewegungsrichtung von oben nach unten betrachtet - mit einer Biegung nach unten führt und zugleich um die Längsachse des Lochbandes L verwindet. Auf diese Weise kann das Lochband L parallel zur Werkstoffbahn W und parallel zur Längsachse z des Rollogehäuses 11 in dessen Gehäuselängskanal 27 (gemeinsamer Aufnahmeraum für die inneren Enden 28 des Lochbandes L) abgelegt werden.

Die von den Endkappen 21 gebildeten bzw. diesen zugeordneten Drehlageraufnahmen für die Wickelwelle 23 sind insgesamt mit 43 und die jeweilige Drehlageraufnahme für das Antriebsrad mit 44 bezeichnet.

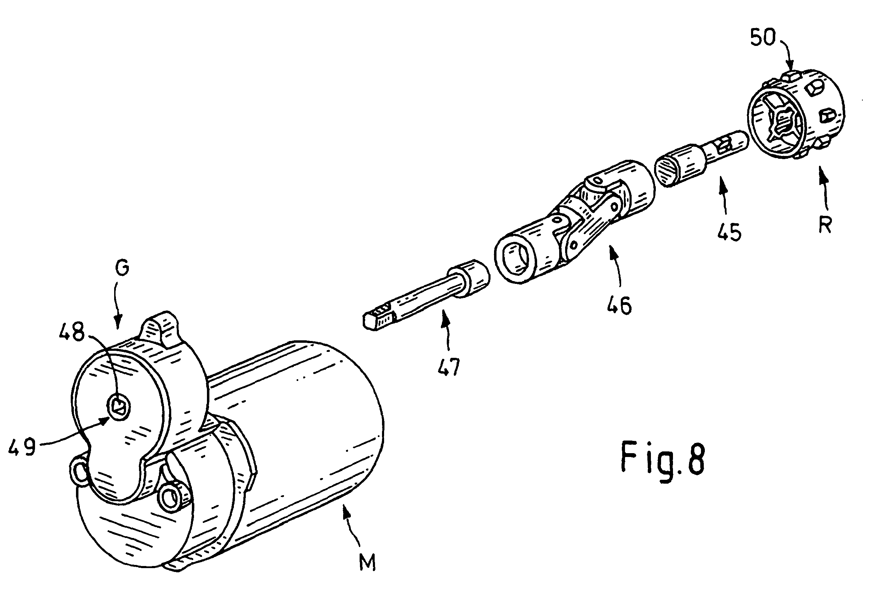

In Fig. 8 ist dargestellt, wie ein jeder Antrieb für das Lochband L ausgebildet ist.

Das etwa walzenförmige Antriebsrad R ist umfangsseitig mit kurzen leistenartigen Vorsprüngen 50 versehen, welche in die entsprechend geformten Löcher 37 des Lochbandes L eingreifen können.

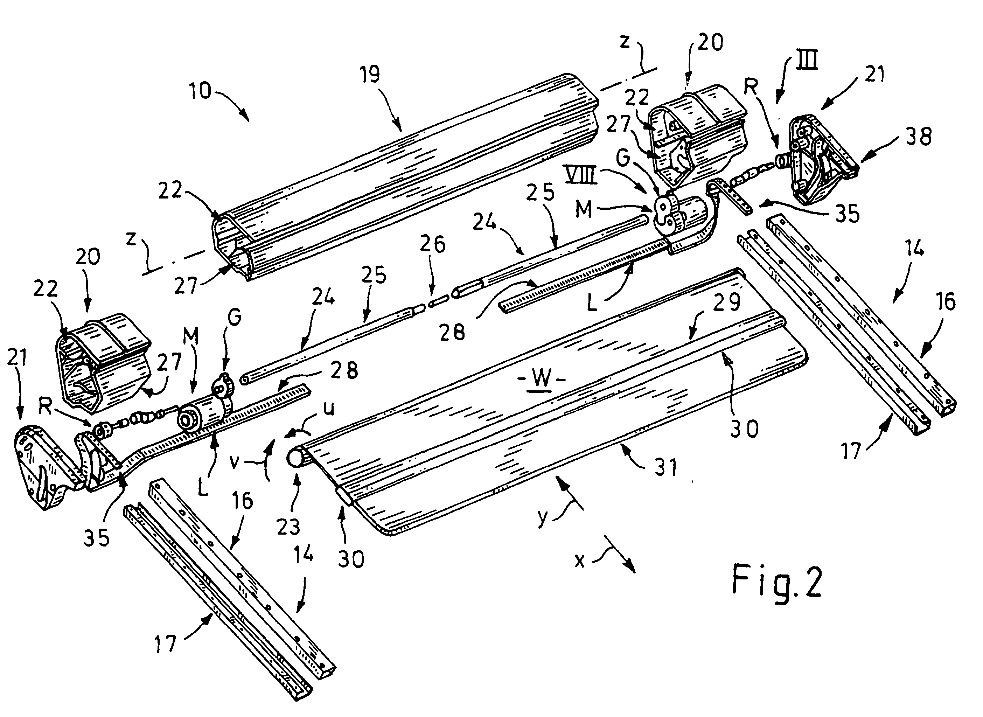

Eine Steckwelle 45 stellt die Drehverbindung zwischen dem Antriebsrad R und einem Kardangelenk 46 her, welches wiederum über eine Steckwelle 47 mit dem Getriebe G drehverbunden ist. Die dazu erforderliche Steckverbindung ist ähnlich ausgebildet wie die mit einer Vierkant-Steckaufnahme 48 versehene Abtriebswelle 49, welche (vgl. Fig. 2) jeweils als Drehaufnahme für eine Teilwelle 25 der Gleichlaufwelle 24 dient.

Die Laderaumabdeckung 10 funktioniert wie folgt (s. Fig. 5):

Das in den Aufnahmen 12 angeordnete Rollogehäuse 11 enthält die aufgewickelte Werkstoffbahn W (vgl. Fig. 2). Über die elektrischen Kontaktepaare K1 (aufnahmeseitiges bzw. fahrzeugseitiges Kontaktpaar) und K2 (Kontaktpaar des Rollogehäuses 11) erfolgt die elektrische Einspeisung zu den beiden reversierbaren elektrischen Antriebsmotoren M.

Die Einspeisung kann zunächst so geschaltet sein, dass sich die Antriebsräder R in Abwickeldrehrichtung v drehen, so dass sich der mit dem Lochband L bewegungsgekuppelte Gleitstein S in Ausfahrrichtung x der Werkstoffbahn W zunächst in die trichterförmige Aufweitung 40 und sodann in den Führungskanal 18 selbst hineinbewegt.

Ein Zurückbewegung des Gleitsteins S in Einfahrbewegungsrichtung y der Werkstoffbahn W erfolgt in analog umgekehrter Weise durch entsprechendes Umsteuern der elektrischen Einspeisung.

Die elektrische Steuerung kann zweckmäßig durch Fernbedienung oder auch mittels entsprechender Schalter, die z.B. auch mit der Heckklappe gekuppelt sein können, teilautomatisch oder vollautomatisch erfolgen.

Die jeweilige Endlagenabschaltung bezüglich der beiden Bewegungsrichtungen x und y kann in zweckmäßiger Weise mittels der inneren Enden 28 der Lochbändern L durchgeführt werden, welche mit Schaltnocken versehen sein können, die mit rollogehäuseseitigen elektrischen Mikroschaltern zusammenwirken.

## Patentansprüche

1. Laderaumabdeckung (10) für Kraftwagen, wie für Kombinations-Personenkraftwagen, mit einer in einem Rollogehäuse (11) angeordneten, zumindest im Aufwickeldrehsinn (u) antreibbaren Wickelwelle (23) zur Aufnahme einer Werkstoffbahn (W), deren innerer Querrand an der Wickelwelle (23) befestigt ist und deren äußerer Querrand an einer Querversteifung (30) gehalten ist, welche beidendig je ein Führungselement (S) trägt, welches jeweils mittels einer fahrzeugseitig befestigten Längsführung (14) in Schließ(x)- und Öffnungsrichtung (y) der Werkstoffbahn (W) geführt ist,
wobei das Rollogehäuse (11) einschließlich Werkstoffbahn (W) und Querversteifung (30) den beiden Längsführungen (14) lösbar befestigt zugeordnet sind,
und wobei das Rollogehäuse (11) mindestens einen motorischen Antrieb (M, G) für zwei langgestreckte, umlenkbare, hinreichend drucksteife Getriebemittel-Abschnitte (L) enthält, welche jeweils mit ihrem äußeren Ende (35) an einem Führungselement (S) der Querversteifung (30) angreifen, und welche aus dem Rollogehäuse (11) heraus in die zugeordnete Längsführung (14) hinein bewegbar sind.

2. Laderaumabdeckung nach Anspruch 1, **dadurch gekennzeichnet, dass** jeder Getriebemittel-Abschnitt (L) sich im Formschlusseingriff mit einem Antriebsrad (R) befindet.

3. Laderaumabdeckung nach Anspruch 2, **dadurch gekennzeichnet, dass** jedem Antriebsrad (R) Führungsbereiche (38, 39, 41) für den korrespondierenden Getriebemittel-Abschnitt (L) zugeordnet sind.

4. Laderaumabdeckung nach Anspruch 3, **dadurch gekennzeichnet, dass** zwischen dem jeweiligen Antriebsrad (R) und der benachbarten Längsführung (14) ein mit letzterer ausgerichteter geradliniger Führungsbereich, nämlich ein Führungsansatz (38), angeordnet ist.

5. Laderaumabdeckung nach Anspruch 3 oder nach Anspruch 4, **dadurch gekennzeichnet, dass** an der dem geradlinigen Führungsbereich (38) abgewandten Seite des Antriebsrades (R) ein Umlenkungs-Führungsbereich (41) angeordnet ist.

6. Laderaumabdeckung nach einem der Ansprüche 4 bis 5, **dadurch gekennzeichnet, dass** der geradlinige Führungsbereich (38) und der Umlenkungsführungsbereich (41) mittels eines das Antriebsrad (R) außenumfangsseitig umgebenden teilkreisförmigen Führungsbereichs (39) verbunden sind.

7. Laderaumabdeckung nach einem der Ansprüche 1 bis 6, **dadurch gekennzeichnet, dass** das Rollogehäuse (11) jeweils an der dem Antriebsrad (R) abgewandten Seite des jeweiligen Umlenkungs-Führungsbereichs (41) einen Aufnahmeraum (27) für das innere Ende (28) des korrespondierenden Getriebemittel-Abschnitts (L) bildet.

8. Laderaumabdeckung nach Anspruch 7, **dadurch gekennzeichnet, dass** das Rollogehäuse (11) für die inneren Enden (28) beider Getriebemittel-Abschnitte (L) einen gemeinsamen Aufnahmeraum (27) bildet.

9. Laderaumabdeckung nach einem der Ansprüche 5 bis 8, **dadurch gekennzeichnet, dass** der Umlenkungs-Führungsbereich (41) den ihm zugeordneten Getriebemittel-Abschnitt (L) um dessen Längsachse verwindet.

10. Laderaumabdeckung nach einem der Ansprüche 1 bis 9, **dadurch gekennzeichnet, dass** jeder Getriebemittel-Abschnitt (L) ein flaches Band rechteckigen Querschnitts bildet.

11. Laderaumabdeckung nach Anspruch 10, **dadurch gekennzeichnet, dass** jeder Getriebemittel-Abschnitt (L) ein Lochband bildet, in welches das zugehörige Antriebsrad (R) mit umfangsseitig angeordneten Vorsprüngen (50) formschlüssig eingreift.

12. Laderaumabdeckung nach einem der Ansprüche 1 bis 11, **dadurch gekennzeichnet, dass** jeder Getriebemittel-Abschnitt (L) aus Kunststoff besteht.

13. Laderaumabdeckung nach einem der Ansprüche 4 bis 12, **dadurch gekennzeichnet, dass** der geradlinige Führungsansatz (38) bei gänzlich aufgewickelter Werkstoffbahn (W) zugleich das Führungselement (S) der Querversteifung (30) aufnimmt.

14. Laderaumabdeckung nach einem der Ansprüche 1 bis 13, **dadurch gekennzeichnet, dass** das Rollogehäuse (11) mit zwei Endkappen (21) versehen ist, welche jeweils an ihrer Innenseite die Lageraufnahmen (43, 44) für die Wickelwelle (23) und für das Antriebsrad (R) sowie die Führungsbereiche (38, 39, 41) für den korrespondierenden Getriebemittel-Abschnitt (L) bilden.

15. Laderaumabdeckung nach einem der Ansprüche 1 bis 14, **dadurch gekennzeichnet, dass** beide Antriebsräder (R) mit einem gemeinsamen Antriebsmotor drehverbunden sind.

16. Laderaumabdeckung nach einem der Ansprüche 1 bis 14, **dadurch gekennzeichnet, dass** jedes Antriebsrad (R) mit einem eigenen Antriebsmotor (M) drehverbunden ist.

17. Laderaumabdeckung nach Anspruch 16, **dadurch gekennzeichnet, dass** mit beiden Antriebsmotoren (M) eine Synchronisierungsvorrichtung (24) zusammenwirkt.

18. Laderaumabdeckung nach einem der Ansprüche 1 bis 17, **dadurch gekennzeichnet, dass** jeder Antriebsmotor (M) gegebenenfalls einschließlich seines Getriebes (G) innerhalb des Rollogehäuses (11) aufgenommen ist.

19. Laderaumabdeckung nach einem der Ansprüche 1 bis 18, **dadurch gekennzeichnet, dass** jeder Antriebsmotor (M) ein elektrischer Antriebsmotors insbesondere ein reversierbarer elektrischer Antriebsmotor ist.

20. Laderaumabdeckung nach Anspruch 19, **dadurch gekennzeichnet, dass** zur Einspeisung des Elektromotors (M) aus dem Rollogehäuse elektrische Kontakte (K2) herausgeführt sind, welche mit fahrzeugseitigen elektrischen Gegenkontakten (K1) zusammenwirken.

## Claims

1. Storage space cover (10) for motor vehicles, such as estate-type vehicles, having a winding shaft (23), which is arranged in a blind housing (11) and which can be driven at least in the rolling-up rotation direction (u), for receiving a fabric web (W) whose inner transverse edge is secured to the winding shaft (23) and whose outer transverse edge is retained on a transverse support (30) which carries at both ends a guiding element (S) which is guided in each case in the closing direction (x) and the opening direction (y) of the fabric web (W) by means of a longitudinal guide (14) which is secured at the vehicle side,
the blind housing (11) including the fabric web (W) and the transverse support (30) being associated in a releasably fixed manner with the two longitudinal guides (14),
and the blind housing (11) containing at least one motor-driven drive (M, G) for two elongate, redirectable gear means portions (L) which are sufficiently rigid in terms of compression and which engage in each case with the outer end (35) thereof on a guiding element (S) of the transverse support (30) and which can be moved out of the blind housing (11) into the associated longitudinal guide (14).

2. Storage space cover according to claim 1, **characterised in that** each gear means portion (L) is engaged in a positive-locking manner with a drive wheel (R).

3. Storage space cover according to claim 2, **characterised in that** guiding regions (38, 39, 41) for the corresponding gear means portion (L) are associated with each drive wheel (R).

4. Storage space cover according to claim 3, **characterised in that** a linear guiding region, that is to say, a guiding extension (38), which is aligned with the longitudinal guide (14) is arranged between the respective drive wheel (R) and the adjacent longitudinal guide (14).

5. Storage space cover according to claim 3 or claim 4, **characterised in that** a redirecting guiding region (41) is arranged at the side of the drive wheel (R) facing away from the linear guiding region (38).

6. Storage space cover according to either claim 4 or claim 5, **characterised in that** the linear guiding region (38) and the redirecting guiding region (41) are connected by means of a guiding region (39) which is in the form of a part-circle and which surrounds the drive wheel (R) at the outer peripheral side.

7. Storage space cover according to any one of claims 1 to 6, **characterised in that** the blind housing (11) in each case forms a receiving space (27) for the inner end (28) of the corresponding gear means portion (L) at the side of the respective redirecting guiding region (41) facing away from the drive wheel (R).

8. Storage space cover according to claim 7, **characterised in that** the blind housing (11) forms a common receiving space (27) for the inner ends (28) of both gear means portions (L).

9. Storage space cover according to any one of claims 5 to 8, **characterised in that** the redirecting guiding region (41) twists the gear means portion (L) associated therewith about the longitudinal axis thereof.

10. Storage space cover according to any one of claims 1 to 9, **characterised in that** each gear means portion (L) forms a planar strip having a rectangular cross-section.

11. Storage space cover according to claim 10, **characterised in that** each gear means portion (L) forms a perforated strip in which the associated drive wheel (R) engages in a positive-locking manner with projections (50) which are arranged at the peripheral side.

12. Storage space cover according to any one of claims 1 to 11, **characterised in that** each gear means portion (L) comprises plastics material.

13. Storage space cover according to any one of claims 4 to 12, **characterised in that** the linear guiding extension (38) simultaneously receives the guiding element (S) of the transverse support (30) when the fabric web (W) is completely wound up.

14. Storage space cover according to any one of claims 1 to 13, **characterised in that** the blind housing (11) is provided with two end caps (21) which in each case form, at the inner side thereof, the bearing receiving elements (43, 44) for the winding shaft (23) and for the drive wheel (R) and the guiding regions (38, 39, 41) for the corresponding gear means portion (L).

15. Storage space cover according to any one of claims 1 to 14, **characterised in that** both drive wheels (R) are rotationally connected to a common drive motor.

16. Storage space cover according to any one of claims 1 to 14, **characterised in that** each drive wheel (R) is rotationally connected to its own drive motor (M).

17. Storage space cover according to claim 16, **characterised in that** a synchronisation device (24) co-operates with both drive motors (M).

18. Storage space cover according to any one of claims 1 to 17, **characterised in that** each drive motor (M), optionally including the gear mechanism (G) thereof, is received in the blind housing (11).

19. Storage space cover according to any one of claims 1 to 18, **characterised in that** each drive motor (M) is an electric drive motor, in particular a reversible electric drive motor.

20. Storage space cover according to claim 19, **characterised in that** electrical contacts (K2), which co-operate with electrical counter-contacts (K1) located at the vehicle side, are guided out of the blind housing in order to supply the electric motor (M).

## Revendications

1. Couverture de compartiment de charge (10) pour des véhicules automobiles, notamment pour des voitures familiales, comprenant un arbre d'entraînement (23), aménagé dans un boîtier de store (11) et pouvant être entraîné au moins dans le sens d'enroulement (u), destiné à recevoir une glissière de matière manufacturée (W), le bord transversal intérieur de laquelle est fixé à l'arbre d'enroulement (23) et le bord transversal extérieur de laquelle est maintenu sur un renforcement transversal (30), laquelle porte aux deux extrémités un élément de guidage (S) chacun, lequel est dans chaque cas guidé dans la direction de fermeture (x) et dans la direction d'ouverture (y) de la glissière de matière manufacturée (W) au moyen d'un guide longitudinal (14) fixé du côté du véhicule,
dans laquelle le boîtier de store (11), incluant la glissière de matière manufacturée (W) et le renforcement transversal (30), est affecté aux deux guides longitudinaux (14) par une fixation détachable, et
dans laquelle le boîtier de store (11) contient au moins un entraînement motorisé (M, G) pour deux segments de moyen d'engrenage (L) allongés, pouvant être redirigés, suffisamment rigides sous pression, lesquels s'accrochent dans chaque cas avec leur extrémité extérieure (35) à un élément de guidage (S) du renforcement transversal (30), et lesquels sont déplaçables hors du boîtier de store (11) vers l'intérieur du guide longitudinal (14) affecté.

2. Couverture de compartiment de charge selon la revendication 1, **caractérisée en ce que** chaque segment de moyen d'engrenage (L) se trouve en prise crabotée avec une roue motrice (R).

3. Couverture de compartiment de charge selon la revendication 2, **caractérisée en ce qu'**il est affecté à chaque roue motrice (R) des zones de guidage (38, 39, 41) pour le segment de moyen d'engrenage (L) correspondant.

4. Couverture de compartiment de charge selon la revendication 3, **caractérisée en ce qu'**il est aménagé, entre la roue motrice (R) correspondante et le guide longitudinal (14) adjacent, une zone de guidage rectiligne, à savoir un saillant de guidage (38), aligné à ce dernier guide longitudinal.

5. Couverture de compartiment de charge selon la revendication 3 ou la revendication 4, **caractérisée en ce qu'**il est aménagé une zone de guidage de redirection (41) sur le côté de la roue motrice (R) qui est opposé à la zone de guidage (38) rectiligne.

6. Couverture de compartiment de charge selon l'une quelconque des revendications 4 à 5, **caractérisée en ce que** la zone de guidage (38) rectiligne et la zone de guidage de redirection (41) sont connectées au moyen d'une zone de guidage (39) en arc de cercle entourant la roue motrice (R) sur la circonférence extérieure.

7. Couverture de compartiment de charge selon l'une quelconque des revendications 1 à 6, **caractérisée en ce que** le boîtier de store (11) forme dans chaque cas, sur le côté de la zone de guidage de redirection (41) correspondante qui est opposé à la roue motrice (R), un compartiment de logement (27) pour l'extrémité intérieure (28) du segment de moyen d'engrenage (L) correspondant.

8. Couverture de compartiment de charge selon la revendication 7, **caractérisée en ce que** le boîtier de store (11) forme un compartiment de logement (27) commun pour les extrémités intérieures (28) des deux segments de moyen d'engrenage (L).

9. Couverture de compartiment de charge selon l'une quelconque des revendications 5 à 8, **caractérisée en ce que** la zone de guidage de redirection (41) tord le segment de moyen d'engrenage (L) qui lui est affecté autour de son axe longitudinal.

10. Couverture de compartiment de charge selon l'une quelconque des revendications 1 à 9, **caractérisée en ce que** chaque segment de moyen d'engrenage (L) forme une bande plate de section transversale rectangulaire.

11. Couverture de compartiment de charge selon la revendication 10, **caractérisée en ce que** chaque segment de moyen d'engrenage (L) forme une bande perforée, dans laquelle la roue motrice (R) associée s'engrène de manière crabotée avec des saillants (50) aménagés du côté de la circonférence.

12. Couverture de compartiment de charge selon l'une quelconque des revendications 1 à 11, **caractérisée en ce que** chaque segment de moyen d'engrenage (L) se compose de matière synthétique.

13. Couverture de compartiment de charge selon l'une quelconque des revendications 4 à 12, **caractérisée en ce que** le saillant de guidage (38) rectiligne, dans le cas où la glissière de matière manufacturée (W) est complètement enroulée, reçoit également l'élément de guidage (S) du renforcement transversal (30).

14. Couverture de compartiment de charge selon l'une quelconque des revendications 1 à 13, **caractérisée en ce que** le boîtier de store (11) est muni de deux capuchons d'extrémité (21), lesquels forment dans chaque cas sur leur côté intérieur les logements pour coussinet (43, 44) pour l'arbre d'enroulement (23) et pour la roue motrice (R) ainsi que les zones de guidage (38, 39, 41) pour le segment de moyen d'engrenage (L) correspondant.

15. Couverture de compartiment de charge selon l'une quelconque des revendications 1 à 14, **caractérisée en ce que** les deux roues motrices (R) sont connectées sans liberté de rotation relative avec un moteur d'entraînement commun.

16. Couverture de compartiment de charge selon l'une quelconque des revendications 1 à 14, **caractérisée en ce que** chaque roue motrice (R) est connectée en raccord tournant relative avec son propre moteur d'entraînement (M).

17. Couverture de compartiment de charge selon la revendication 16, **caractérisée en ce qu'**un appareil de synchronisation (24) coopère avec les deux moteurs d'entraînement (M).

18. Couverture de compartiment de charge selon l'une quelconque des revendications 1 à 17, **caractérisée en ce que** chaque moteur d'entraînement (M), le cas échéant incluant son engrenage (G), est logé à l'intérieur du boîtier de store (11),

19. Couverture de compartiment de charge selon l'une quelconque des revendications 1 à 18, **caractérisée en ce que** chaque moteur d'entraînement (M) est un moteur d'entraînement électrique, en particulier un moteur d'entraînement électrique réversible.

20. Couverture de compartiment de charge selon la revendication 19, **caractérisée en ce que**, pour l'alimentation du moteur électrique (M), des connecteurs électriques (K2) sont menés hors du boîtier de store, lesquels coopèrent avec des connecteurs d'accouplement (K1) du côté du véhicule.
